(19) **Europäisches Patentamt / European Patent Office / Office européen des brevets**

(11) **EP 4 600 050 A1**

(12) **EUROPEAN PATENT APPLICATION**
published in accordance with Art. 153(4) EPC

(43) Date of publication:
**13.08.2025 Bulletin 2025/33**

(21) Application number: **23874500.4**

(22) Date of filing: **18.07.2023**

(51) International Patent Classification (IPC):
**B60B 17/00** (2006.01)    **B61F 13/00** (2006.01)

(52) Cooperative Patent Classification (CPC):
**B60B 17/00; B61F 13/00**

(86) International application number:
**PCT/JP2023/026180**

(87) International publication number:
**WO 2024/075367 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.10.2022 JP 2022160009**

(71) Applicant: **NIPPON STEEL CORPORATION**
**Chiyoda-ku**
**Tokyo 100-8071 (JP)**

(72) Inventor: **UENISHI, Ayumi**
**Tokyo 100-8071 (JP)**

(74) Representative: **Zimmermann & Partner**
**Patentanwälte mbB**
**Postfach 330 920**
**80069 München (DE)**

(54) **WHEEL**

(57) A wheel (100) includes a boss (10), a rim (20), and a web (30). The rim (20) includes a tread (211) and a flange (212). The web (30) includes a curved portion (31). The curved portion (31) is provided continuous with the rim (20). When the wheel (100) is viewed in longitudinal section, the curved portion (31) curves convexly toward an opposite side to the flange (212) in an axial direction of the wheel (100). The apex (313) of the curved portion (31) is located further outward than a center (Cw) of the web (30) in a radial direction of the wheel (100). When the wheel (100) is viewed in longitudinal section, the web (30) has a thickness that changes along a direction in which the web (30) extends. The web (30) has a maximum thickness at the curved portion (31).

FIG. 1

EP 4 600 050 A1

**Description**

TECHNICAL FIELD

The present disclosure relates to a wheel for a railway vehicle.

BACKGROUND ART

A wheel for a railway vehicle includes a boss, a rim, and a web. An axle is inserted into the boss. The rim is arranged on the outer circumferential side of the boss. The rim includes a tread and a flange. The tread is a surface that comes into contact with the top surface of a rail. The flange is provided continuous with one end of the tread, and protrudes to the outer circumferential side of the wheel relative to the tread. The web connects the rim and the boss.

A wheel for a railway vehicle is required to have rigidity as its basic performance. Nowadays, there is also a demand for wheels for a railway vehicle to have quietness when the railway vehicle is running.

Patent Literature 1 discloses a wheel for reducing noise when a railway vehicle is running. The wheel disclosed in Patent Literature 1 includes an outer ring, an inner ring, and a cushion arranged between the outer ring and the inner ring. According to Patent Literature 1, vibrations received by the outer ring are absorbed by the cushion, so that transmission of the vibrations to the carriage through the inner ring and the axle is reduced. Consequently, the noise when the railway vehicle is running is reduced.

Patent Literature 2 also discloses a wheel for reducing noise when a railway vehicle is running. In Patent Literature 2, dynamic transducers are attached to a wheel that includes a boss, a rim, and a web. The dynamic transducers are arranged on both sides of the web, and are fixed to the inner peripheral surface of the rim. Each of the dynamic transducers includes an active mass portion made of an annular steel piece, and an elastic element interposed between the active mass portion and the wheel. The dynamic transducer has a natural frequency equal to a resonance frequency of the wheel for a predetermined natural vibration mode, and is fixed to the rim so as to vibrate in the same mode as the relevant natural vibration mode. It is explained in Patent Literature 2 that when the vibration of the rim is transmitted to the dynamic transducer, the dynamic transducer vibrates at the natural frequency of the wheel and synchronizes with the vibration of the wheel with an opposite phase shift, and therefore the vibration and noise of the wheel are attenuated.

CITATION LIST

PATENT LITERATURE

    Patent Literature 1: Japanese Patent Application Publication No. 2-63901
    Patent Literature 2: Japanese Patent Application Publication No. 10-81104

SUMMARY OF INVENTION

TECHNICAL PROBLEM

In this connection, in wheels that are slowed using tread brakes, the web often has a curved shape in longitudinal sectional view of the wheel, in order to ensure the rigidity of the web when passing through a curved section of rail. However, the web having a curved shape compromises the quietness of the wheel when the railway vehicle is running. More specifically, it is general that, in a structure, the portion which has the least rigidity and is most likely to vibrate becomes a sound source and generates noise, and if the weight, material, and rigidity are the same, the size of the noise will be proportional to the surface area (radiating area) of the portion that is the sound source. In a wheel for a railway vehicle, the rigidity of the web is comparatively small, and the web is the main noise source. In the case of a web that has a curved shape in longitudinal sectional view of the wheel, the surface area of the web is larger in comparison to a web that has a straight shape in longitudinal sectional view of the wheel. Therefore, under conditions where webs have the same rigidity and weight, there is a high possibility that a web with a curved shape will generate more noise than a web with a straight shape.

To improve the quietness of a wheel when a railway vehicle is running, it is conceivable to make the cross-sectional shape of the web a straight shape to reduce the surface area (noise radiating area) of the web. However, in a case where the web has a straight cross-sectional shape, there is a problem that the rigidity of the web is likely to decrease when the wheel passes through a curved section of rail.

To improve the quietness of a wheel, it is also conceivable to increase the overall thickness of the web to improve the rigidity of the web. However, simply increasing the thickness of the web will lead to an excessive increase in the weight of the wheel. As the weight of a wheel increases, the aggressiveness of the wheel against the rail increases, and there is thus a problem that the rail maintenance cost increases.

An objective of the present disclosure is to efficiently improve the rigidity of a web to ensure the quietness of a wheel when a railway vehicle is running.

SOLUTION TO PROBLEM

A wheel for a railway vehicle according to the present disclosure includes a boss, a rim, and a web. The boss has a cylindrical shape. The rim is arranged on an outer circumferential side of the boss. The web connects the boss and the rim. The rim includes a tread and a flange. The tread comes into contact with a top surface of a rail on which the railway vehicle runs. The flange is provided continuous with one end of the tread in an axial direction of the wheel. The flange protrudes outward in a radial direction of the wheel from the tread. The web includes a curved portion. The curved portion is provided continuous with the rim. The curved portion curves convexly toward an opposite side to the flange in the axial direction of the wheel in longitudinal sectional view of the wheel. An apex of the curved portion is located further outward than a center of the web in the radial direction of the wheel. The web has a thickness that changes along a direction in which the web extends in longitudinal sectional view of the wheel. The web has a maximum thickness at the curved portion.

ADVANTAGEOUS EFFECTS OF INVENTION

According to the present disclosure, the rigidity of a web can be efficiently improved to ensure the quietness of a wheel when a railway vehicle is running.

BRIEF DESCRIPTION OF DRAWINGS

[FIG. 1] FIG. 1 is a drawing of longitudinal section of a wheel for a railway vehicle according to an embodiment.
[FIG. 2] FIG. 2 is partial enlarged view of the wheel illustrated in FIG. 1.
[FIG. 3] FIG. 3 is a view illustrating the external shape of a wheel according to Examples.
[FIG. 4] FIG. 4 is a view illustrating the external shape of a wheel according to Comparative Example 1.
[FIG. 5] FIG. 5 is a view illustrating the external shape of a wheel according to Comparative Example 2.
[FIG. 6] FIG. 6 is a graph showing an equivalent radiated power (ERP) of each Example and each Comparative Example.

DESCRIPTION OF EMBODIMENTS

A wheel for a railway vehicle according to an embodiment includes a boss, a rim, and a web. The boss has a cylindrical shape. The rim is arranged on an outer circumferential side of the boss. The web connects the boss and the rim. The rim includes a tread and a flange. The tread comes into contact with a top surface of a rail on which the railway vehicle runs. The flange is provided continuous with one end of the tread in an axial direction of the wheel. The flange protrudes outward in a radial direction of the wheel from the tread. The web includes a curved portion. The curved portion is provided continuous with the rim. The curved portion curves convexly toward an opposite side to the flange in the axial direction of the wheel in longitudinal sectional view of the wheel. An apex of the curved portion is located further outward than a center of the web in the radial direction of the wheel. The web has a thickness that changes along a direction in which the web extends in longitudinal sectional view of the wheel. The web has a maximum thickness at the curved portion (first configuration).

As will also be understood from, for example, Patent Literature 2, in a conventional wheel for a railway vehicle, the thickness of the web decreases progressively from the boss side toward the rim side. In contrast, in the wheel for a railway vehicle according to the first configuration, the thickness of the web is not constant, and the thickness is greatest at the curved portion provided on the rim side of the web. By this means, the region of the web on the rim side can be provided with relatively high rigidity, and vibration of the web as well as generation of noise that accompanies such vibration can be suppressed when the railway vehicle is running.

In a wheel for a railway vehicle, in a case where the thickness is increased throughout the entire web, although the overall rigidity of the web increases, the weight of the web and the weight of the wheel that includes the web also increase significantly. On the other hand, in the wheel for a railway vehicle according to the first configuration, because the thickness of the web is increased at the curved portion on the rim side, the degree of increase in the weight of the wheel can be suppressed compared to the case where the thickness is increased uniformly throughout the entire web. Further, in the wheel according to the first configuration, because the thickness of the web is maximized at the curved portion on the rim side, the rigidity of the web can be improved and noise generated from the web can be reduced while suppressing an increase in the weight of the wheel. Thus, according to the wheel of the first configuration, the rigidity of the web can be efficiently improved to ensure the quietness of the wheel when the railway vehicle is running.

In the wheel according to the first configuration, the web includes the curved portion. Therefore, the rigidity of the web when the wheel passes through a curved section of rail can be ensured.

The curved portion may include a first region and a second region. The first region includes the apex of the curved portion. The second region is arranged on the boss side relative to the first region. The second region includes a base of the curved portion. Preferably the web has the maximum thickness in the first region (second configuration).

According to the second configuration, the thickness of the web can be maximized at or near the apex of the curved portion. This makes it easier to limit the surface area of the inner side of the curve of the curved portion, and therefore noise generated from the web can be further reduced. Hence, the quietness of the wheel when the railway vehicle is running can be improved.

A thickness of the second region may be less than a thickness of the first region (third configuration).

When a thickness of the wheel at a position where an imaginary cylinder, which has a diameter that is 0.72 times an outer diameter of the tread and is coaxial with the wheel, intersects with the wheel is defined as S1, a thickness of the web at a position where an imaginary cylinder, which has a diameter that is 0.66 times the outer diameter of the tread and is coaxial with the wheel, intersects with the web is defined as S2, and a thickness of the web at a position where an imaginary cylinder, which has a diameter that is 0.60 times the outer diameter of the tread and is coaxial with the wheel, intersects with the web is defined as S3, preferably S1, S2, and S3 satisfy $S1 \geq S2 \geq S3$ and $S1 > S3$ (fourth configuration).

S2 and S3 may satisfy $S3 \leq 0.9 \times S2$ (fifth configuration).

An embodiment of the present disclosure is described hereunder while referring to the accompanying drawings. In the drawings, the same reference symbols are assigned to the same or equivalent parts, and a description thereof is not repeated.

[Configuration of wheel]

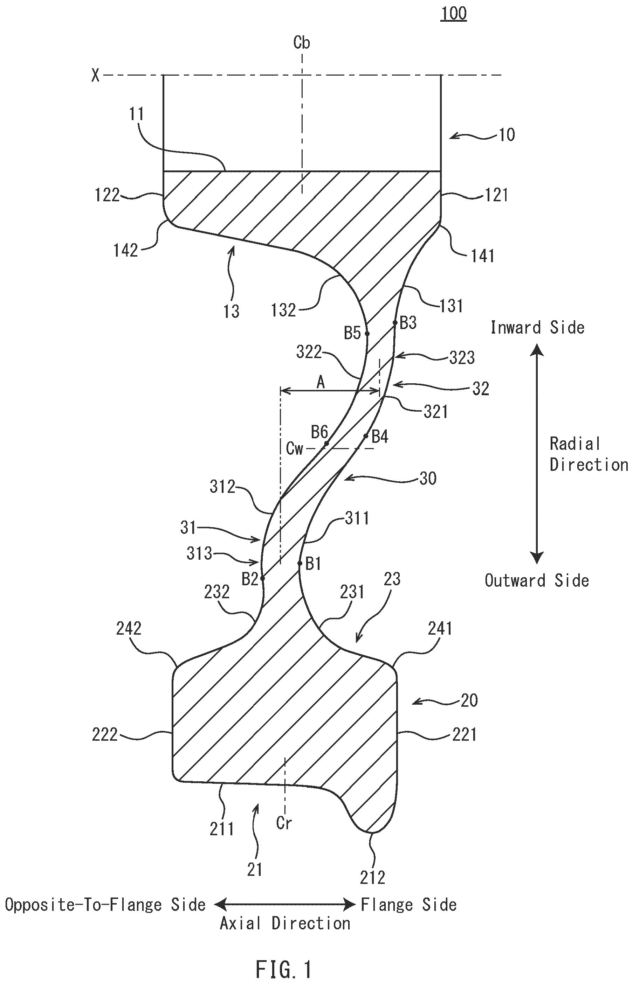

FIG. 1 is a drawing of longitudinal section of a wheel 100 for a railway vehicle according to the present embodiment. The term "longitudinal section of the wheel 100" refers to a cross section of the wheel 100 that includes a central axis X. The longitudinal section of the wheel 100 is symmetric about the central axis X, and therefore FIG. 1 illustrates the wheel 100 on one side of the central axis X only. In the present embodiment, a direction in which the central axis X of the wheel 100 extends is referred to as an "axial direction". Further, in the present embodiment, a radial direction of the wheel 100 may be referred to simply as a "radial direction".

Referring to FIG. 1, the wheel 100 includes a boss 10, a rim 20, and a web 30.

The boss 10 forms an inner circumferential portion of the wheel 100. The boss 10 has a cylindrical shape. An axle (not illustrated) of a railway vehicle is to be inserted into the boss 10.

The boss 10 includes an inner peripheral surface 11, end faces 121 and 122, an outer peripheral surface 13, and corner portions 141 and 142. When the wheel 100 is viewed in longitudinal section, the inner peripheral surface 11 extends in the axial direction. When the wheel 100 is viewed in longitudinal section, the end faces 121 and 122 are continuous with both ends of the inner peripheral surface 11 and extend radially outward from the inner peripheral surface 11. The outer peripheral surface 13 is disposed on the outward side in the radial direction relative to the inner peripheral surface 11. The outer peripheral surface 13 is connected to the end faces 121 and 122 via the corner portions 141 and 142. The outer peripheral surface 13 includes fillet portions 131 and 132. The boss 10 is smoothly connected to the web 30 by the fillet portions 131 and 132. In longitudinal sectional view of the wheel 100, each of the fillet portions 131 and 132 has a shape that curves concavely toward the inward side of the boss 10, and the fillet portions 131 and 132 extend from the web 30 to the corner portion 141 side and the corner portion 142 side, respectively.

The rim 20 is arranged on the outer circumferential side of the boss 10. The rim 20 forms an outer circumferential portion of the wheel 100. The rim 20 includes an outer peripheral surface 21, side surfaces 221 and 222, an inner peripheral surface 23, and corner portions 241 and 242.

The outer peripheral surface 21 includes a tread 211 and a flange 212. The tread 211 is a face that comes into contact with the top surface of a rail on which the railway vehicle runs. The flange 212 is provided continuous with one end of the tread 211 in the axial direction of the wheel 100. The flange 212 protrudes outward in the radial direction from the tread 211. When the railway vehicle runs on a rail, the flange 212 is positioned on the inner side of the left and right rails in a track width direction. Hereinafter, the side that is closer to the flange 212 in the axial direction of the wheel 100 will be referred to as a "flange side", and the side that is farther from the flange 212 in the axial direction will be referred to as an "opposite-to-flange side".

In the example of the present embodiment, the rim 20 is positioned on the outer side in the track width direction relative to the boss 10. More specifically, a rim-width center Cr is positioned on the opposite-to-flange side relative to a boss-width center Cb. The rim-width center Cr is the center of the rim 20 in the axial direction of the wheel 100. The boss-width center Cb is the center of the boss 10 in the axial direction of the wheel 100.

The side surface 221 is provided continuous with the surface of the flange 212. When the wheel 100 is viewed in longitudinal section, the side surface 221 extends radially inward from the surface of the flange 212. The side surface 222 is arranged on the opposite-to-flange side relative to the side surface 221. When the wheel 100 is viewed in longitudinal section, the side surface 222 extends radially inward from the end on the opposite-to-flange side of the tread 211.

The inner peripheral surface 23 is disposed on the inward side in the radial direction relative to the outer peripheral surface 21. The inner peripheral surface 23 is connected to the side surfaces 221 and 222 via the corner portions 241 and 242. The inner peripheral surface 23 includes fillet portions 231 and 232. The rim 20 is smoothly connected to the web 30 by the fillet portions 231 and 232. In longitudinal sectional view of the wheel 100, each of the fillet portions 231 and 232 has a shape that curves concavely toward the inward side of the rim 20, and the fillet portions 231 and 232 extend from the web 30 to the corner portion 241 side and the corner portion 242 side, respectively.

The web 30 is an annular shape, and connects the boss 10 and the rim 20. The web 30 is formed integrally with the boss 10 and the rim 20. The web 30 includes curved portions 31 and 32.

The curved portion 31 is provided continuous with the rim 20. More specifically, the curved portion 31 is provided continuous with the fillet portions 231 and 232 of the rim 20. The curved portion 31 curves convexly toward the opposite-to-flange side in longitudinal sectional view of the wheel 100. The curved portion 31 includes side surfaces 311 and 312.

The side surface 311 is the surface on the inner side of the curve of the curved portion 31. The side surface 311 is adjacent to the fillet portion 231 on the flange side of the rim 20, and is smoothly connected to the fillet portion 231. Although the side surface 311 of the curved portion 31 and the fillet portion 231 of the rim 20 form a curve in longitudinal sectional view of the wheel 100, usually the curvature of the curve changes at a boundary B1 between the side surface 311 of the curved portion 31 and the fillet portion 231 of the rim 20.

The side surface 312 is the surface on the outer side of the curve of the curved portion 31. The side surface 312 is located on the opposite-to-flange side relative to the side surface 311. The side surface 312 is adjacent to the fillet portion 232 on the opposite-to-flange side of the rim 20, and is smoothly connected to the fillet portion 232. An inflection point exists at a boundary B2 between the side surface 312 of the curved portion 31 and the fillet portion 232 of the rim 20. The curvature of the side surface 312 on the outer side of the curve may be the same as, or different from, the curvature of the side surface 311 on the inner side of the curve. For example, the curvatures of the side surfaces 311 and 312 can be set to be different from each other so that the curvature height of the side surface 311 on the inner side of the curve is lower than the curvature height of the side surface 312 on the outer side of the curve.

The curved portion 32 is arranged on the boss 10 side relative to the curved portion 31. The curved portion 32 is arranged between the curved portion 31 on the rim 20 side and the boss 10. The curved portion 32 is provided continuous with the boss 10. More specifically, the curved portion 32 is provided continuous with the fillet portions 131 and 132 of the boss 10. The curved portion 32 curves convexly toward the flange side in longitudinal sectional view of the wheel 100. That is, the curved portion 32 curves in the opposite direction to the curved portion 31 on the rim 20 side. The curved portion 32 includes side surfaces 321 and 322.

The side surface 321 is the surface on the outer side of the curve of the curved portion 32. The side surface 321 is adjacent to the fillet portion 131 on the flange side of the boss 10, and is smoothly connected to the fillet portion 131. An inflection point exists at a boundary B3 between the side surface 321 of the curved portion 32 and the fillet portion 131 of the boss 10.

Further, the side surface 321 is adjacent to the side surface 311 of the curved portion 31 on the rim 20 side, and is smoothly connected to the side surface 311. An inflection point exists at a boundary B4 between the side surface 321 of the curved portion 32 on the boss 10 side and the side surface 311 of the curved portion 31 on the rim 20 side.

The side surface 322 is the surface on the inner side of the curve of the curved portion 32. The side surface 322 is located on the opposite-to-flange side relative to the side surface 321. The side surface 322 is adjacent to the fillet portion 132 on the opposite-to-flange side of the boss 10, and is smoothly connected to the fillet portion 132. Although the side surface 322 of the curved portion 32 and the fillet portion 132 of the boss 10 form a curve in longitudinal sectional view of the wheel 100, usually the curvature of the curve changes at a boundary B5 between the side surface 322 of the curved portion 32 and the fillet portion 132 of the boss 10.

Further, the side surface 322 is adjacent to the side surface 312 of the curved portion 31 on the rim 20 side, and is smoothly connected to the side surface 312. An inflection point exists at a boundary B6 between the side surface 322 of the curved portion 32 on the boss 10 side and the side surface 312 of the curved portion 31 on the rim 20 side.

An offset amount A of the curved portion 31 on the rim 20 side with respect to the curved portion 32 on the boss 10 side is preferably 60 mm or less. The term "offset amount A" refers to a distance in the axial direction from the center of the thickness of an apex 323 of the curved portion 32 to the center of the thickness of an apex 313 of the curved portion 31. In the curved portion 31 on the rim 20 side, the apex 313 is a portion that is positioned furthest on the opposite-to-flange side. The apex 313 is located further on the outer side than a center Cw of the web 30 in the radial direction. In the curved portion 32 on the boss 10 side, the apex 323 is a portion that is positioned furthest on the flange side. The apex 323 is located further on the inner side than the center Cw of the web 30 in the radial direction. The center Cw of the web 30 is located between the boundary that is located furthest on the outer side in the radial direction among the boundaries B3 and B5 between the boss 10 and the web 30, and the boundary that is located furthest on the inner side in the radial direction among the boundaries B1 and B2 between the rim 20 and the web 30, and is located exactly halfway between the relevant two boundaries in the radial direction.

The web 30 extends from the boss 10 to the rim 20 in longitudinal sectional view of the wheel 100. The web 30 has a thickness that changes along the direction in which the web 30 extends. That is, the thickness of the web 30 is not constant throughout. The phrase "thickness of the web 30" refers to the thickness of the web 30 measured along a normal or a perpendicular direction to the contour on the flange side of the web 30.

The thickness of the web 30 on the rim 20 side is greater than the thickness of the web 30 on the boss 10 side. More specifically, in the region of the web 30 that is on the rim 20 side of the center Cw in the radial direction, there is a portion where the thickness is greater than at any portion of the region of the web 30 on the boss 10 side of the center Cw. The web 30 has the maximum thickness at the curved portion 31 on the rim 20 side.

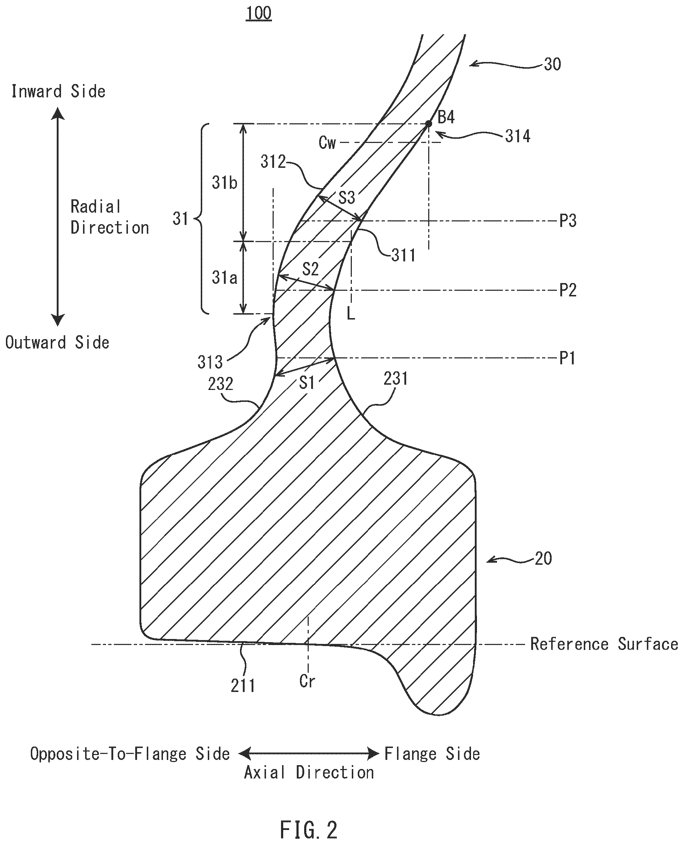

FIG. 2 is a view in which a portion of the wheel 100 on the rim 20 side is enlarged. Referring to FIG. 2, the curved portion 31 on the rim 20 side includes a first region 31a and a second region 31b. The first region 31a includes the apex 313 of the curved portion 31. The first region 31a is a region adjacent to the rim 20. The second region 31b is located on the boss 10 side relative to the first region 31a. The second region 31b includes a base 314 of the curved portion 31. The base 314 is the portion of the curved portion 31 that is positioned furthest on the flange side. The base 314 includes the boundary B4 on the inner side of the curve between the curved portion 31 on the rim 20 side and the curved portion 32 on the boss 10 side (FIG. 1). The base 314 is located on the inward side in the radial direction relative to the apex 313. For example, in longitudinal sectional view of the wheel 100, the first region 31a and the second region 31b may be demarcated by taking as a boundary a point where a center line L between an imaginary straight line extending in the radial direction that is tangent to the apex 313 on the outer side of the curve and an imaginary straight line extending in the radial direction through the boundary B4 intersects with the side surface 311 on the inner side of the curve.

Preferably, the thickness of the second region 31b is less than the thickness of the first region 31a. For example, preferably the thickness at the base 314 of the curved portion 31 is not the maximum thickness of the web 30. The web 30 can have its maximum thickness in the first region 31a. That is, preferably the maximum thickness of the web 30 is at the apex 313 of the curved portion 31 or in the vicinity thereof.

In the wheel 100, preferably dimensions S1, S2, and S3 at predetermined positions P1, P2, and P3 in the radial direction satisfy $S1 \geq S2 \geq S3$ and $S1 > S3$. The position P1 is a position where an imaginary cylinder having a diameter that is 0.72 times the outer diameter of the tread 211 of the rim 20 intersects with the wheel 100 (fillet portions 231, 232 or web 30). The dimension S1 is the thickness of the wheel 100 at the position P1, or more specifically is a length of the wheel 100 along the normal or perpendicular direction to the contour on the flange side of the wheel 100 at the position P1. The position P2 is a position where an imaginary cylinder having a diameter that is 0.66 times the outer diameter of the tread 211 intersects with the web 30. The dimension S2 is the thickness of the web 30 at the position P2, or more specifically is a length of the web 30 along the normal or perpendicular direction to the contour on the flange side of the web 30 at the position P2. The position P3 is a position where an imaginary cylinder having a diameter that is 0.60 times the outer diameter of the tread 211 intersects with the web 30. The dimension S3 is the thickness of the web 30 at the position P3, or more specifically is a length of the web 30 along the normal or perpendicular direction to the contour on the flange side of the web 30 at the position P3. The outer diameter of the tread 211 that serves as a reference for defining the positions P1, P2, and P3 is the outer diameter measured at the position of the rim-width center Cr in the portion of the tread 211 that is substantially parallel to the axial direction (a so-called "tread tapeline"). The imaginary cylinders that intersect with the wheel 100 at the positions P1, P2, and P3, respectively, are coaxial with the wheel 100, that is, are cylinders having a common central axis X (FIG. 1) with the wheel 100.

Although the thickness S3 of the web 30 at the position P3 may be equal to the thickness S2 of the web 30 at the position P2 that is further on the outer circumferential side, preferably the thickness S3 is less than the thickness S2. Preferably S2 and S3 satisfy $S3 \leq 0.9 \times S2$. More preferably, S3 satisfies $S3 \leq 0.8 \times S2$. Although it suffices that S3 is less than or equal to S2, S3 may satisfy $S3 \geq 0.3 \times S2$.

Although not particularly limited, the wheel 100 according to the present embodiment can be produced, for example, by forging or casting, or by machining (cutting) a forged product or a cast product. The material of the wheel 100 is preferably carbon steel.

[Advantageous effects]

In the wheel 100 according to the present embodiment, the thickness of the web 30 is greater on the rim 20 side than on the boss 10 side. More specifically, the web 30 has the maximum thickness at the curved portion 31 provided on the rim 20 side. By this means, in the web 30 that is the main source of noise when the railway vehicle is running, the rigidity of the region on the rim 20 side can be increased. Therefore, vibration of the web 30 can be suppressed, and noise that is generated from the web 30 can be reduced.

In the wheel 100 according to the present embodiment, in the web 30, the curved portion 31 on the rim 20 side has the maximum thickness, and the thickness of the curved portion 32 on the boss 10 side is kept relatively small. Therefore, the degree of increase in the weight of the web 30 and the wheel 100 can be suppressed in comparison to a case where the web 30 has the aforementioned maximum thickness uniformly throughout the entire web 30. Further, since the thickness of the web 30 is made maximum at the curved portion 31 on the rim 20 side to thereby efficiently improve the rigidity by targeting a region that contributes greatly to noise generation in the web 30, noise generated from the web 30 can be efficiently reduced.

Therefore, according to the wheel 100 of the present embodiment, while suppressing an increase in the weight of the web 30 and the wheel 100, the rigidity of the web 30 can be efficiently improved so that the quietness of the wheel 100 when the railway vehicle is running can be ensured.

In the present embodiment, the web 30 is curved as seen in longitudinal sectional view of the wheel 100. Therefore, the rigidity of the web 30 can be ensured when the wheel 100 passes through a curved section of rail.

In the web 30 of the wheel 100 according to the present embodiment, in the curved portion 31 on the rim 20 side, preferably the first region 31a including the apex 313 has the maximum thickness. That is, preferably the maximum thickness of the web 30 is at the apex 313 of the curved portion 31 or in the vicinity thereof. This makes it easier to reduce the area of the side surface 311 on the inner side of the curve of the curved portion 31. Reducing the area of the side surface 311 further reduces noise generated from the web 30, and therefore the quietness of the wheel 100 when the railway vehicle is running can be improved.

In the wheel 100 according to the present embodiment, preferably the dimensions S1, S2, and S3 at the predetermined positions P1, P2, and P3 in the radial direction satisfy the $S1 \geq S2 \geq S3$ and $S1 > S3$. In this case, it is easier to ensure the quietness of the wheel 100. In particular, in a case where $S3 \leq 0.9 \times S2$, the effect of improving the quietness of the wheel 100 can be further enhanced. In a case where $S3 \leq 0.8 \times S2$, the effect of improving the quietness of the wheel 100 can be enhanced even more.

In the wheel 100 according to the present embodiment, preferably the offset amount A in the axial direction between the curved portions 31 and 32 of the web 30 is 60 mm or less. In such a case, the height of the curved portion 31 can be suppressed with respect to the curved portion 32, and the area of the side surface 311 on the inner side of the curve of the curved portion 31 on the rim 20 side can be reduced. By this means, noise generated from the web 30 can be reduced. Further, the rigidity of the web 30 can also be increased as a result of the offset amount A being 60 mm or less.

An embodiment according to the present disclosure has been described above. However, the present disclosure is not limited to the above embodiment, and various modifications may be made without departing from the gist of the present disclosure.

**In** the wheel 100 according to the above embodiment, the thickness of the web 30 is greatest at one part of the curved portion 31 on the rim 20 side. That is, one part of the curved portion 31 has the maximum thickness. However, the curved portion 31 may have the maximum thickness throughout the entirety thereof. For example, the first region 31a including the apex 313, and the second region 31b including the base 314 may have the same thickness. **In** this case also, in the web 30, the thickness in the region that is located further on the boss 10 side than the curved portion 31 will be less than the thickness of the curved portion 31.

Although preferably the web 30 has the maximum thickness in the first region 31a that includes the apex 313 of the curved portion 31, the web 30 can also have the maximum thickness in the second region 31b. It suffices that the web 30 has maximum thickness in at least one portion of the curved portion 31.

In the wheel 100 according to the above embodiment, the web 30 includes the curved portions 31 and 32. However, it suffices that the web 30 includes at least the curved portion 31 on the rim 20 side. The web 30 does not have to include the curved portion 32 on the boss 10 side. For example, in longitudinal sectional view of the wheel 100, the portion of the web 30 that extends from the base 314 of the curved portion 31 to the boss 10 may have a straight shape. In such a case, the offset amount A is a distance in the axial direction from the center of the thickness of the inner end in the radial direction of the web 30 to the center of the thickness of the apex 313 of the curved portion 31. At such time, the boundary that is located furthest on the outer side in the radial direction among the boundaries B3 and B5 between the boss 10 and the web 30 can be treated as the inner end in the radial direction of the web 30.

In the wheel 100 according to the above embodiment, the rim-width center Cr is located on the opposite-to-flange side relative to the boss-width center Cb. However, the rim-width center Cr may be located on the flange side relative to the boss-width center Cb. Alternatively, the positions of the rim-width center Cr and the boss-width center Cb in the axial direction may be substantially aligned.

EXAMPLES

Hereunder, the present disclosure is described in further detail by way of Examples. However, the present disclosure should not be construed to be limited to the following Examples.

To verify the advantageous effects achieved according to the present disclosure, wheels were subjected to analysis by the finite element method using general-purpose structural analysis software and the quietness of the wheels was evaluated. In the analysis, a force simulating a rail reaction force was applied to the tread of a 360° wheel model, and the response to vibration at such time was evaluated as the quietness of the wheel. An equivalent radiated power (ERP) determined by the following expression was used to evaluate the quietness.

[Expression 1]

$$ERP = c \sum_{i=1}^{N} V_{ni}^2 \Delta S_i$$

In the above expression, $\Delta S_i$ is the elemental area of the wheel surface, and $V_{ni}$ is the vibration velocity in the normal direction of the surface. Further, c is a coefficient determined according to atmospheric conditions and the like. A larger ERP indicates a greater ability to radiate sound.

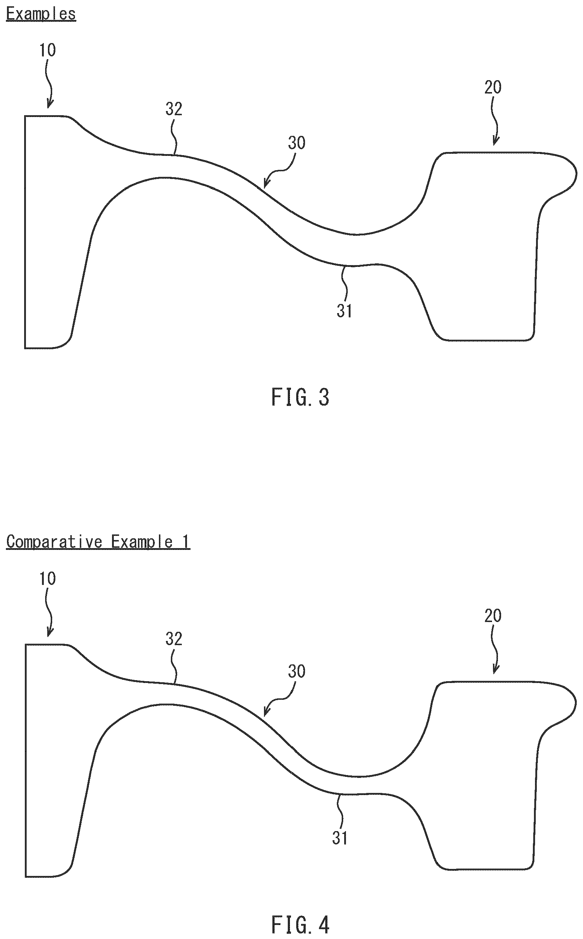

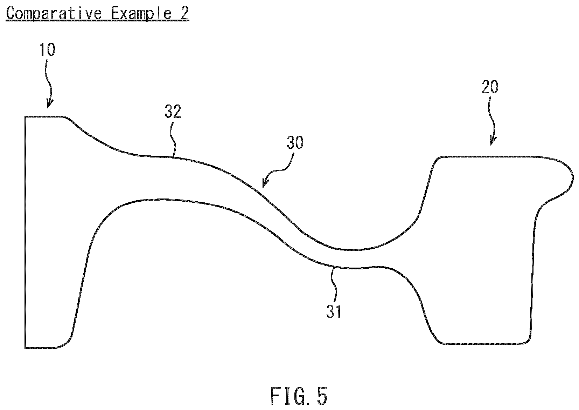

FIG. 3 is a view illustrating the external shape of the wheels according to the Examples. FIG. 4 and FIG. 5 are views illustrating the external shapes of wheels according to Comparative Examples. As illustrated in FIG. 3, in the wheels according to the Examples, similarly to the wheel 100 (FIG. 1) according to the embodiment described above, the thickness of the web 30 was small at the curved portion 32 on the boss 10 side, and was greatest at the curved portion 31 on the rim 20 side. On the other hand, as illustrated in FIG. 4, in the wheel according to Comparative Example 1, although the web 30 included the curved portions 31 and 32 similarly to the Examples, the thickness of the web 30 was constant throughout the entirety thereof. As illustrated in FIG. 5, in a wheel according to Comparative Example 2, the thickness of the web 30 was small at the curved portion 31 on the rim 20 side, and was greatest at the curved portion 32 on the boss 10 side. The conditions with regard to the dimensions of each wheel are shown in Table 1.

[Table 1]

TABLE 1

|  | Dimension | | |
|---|---|---|---|
|  | S1 | S2 | S3 |
| Diameter Ratio Relative to Reference Surface (Tread) | 0.72 | 0.66 | 0.60 |
| Example 1 | 1.6 | 1.0 | 1.0 |
| Example 2 | 1.0 | 1.0 | 0.7 |
| Example 3 | 1.0 | 1.0 | 0.8 |
| Example 4 | 1.3 | 1.0 | 0.7 |
| Comparative Example 1 | 0.9 | 1.0 | 1.0 |
| Comparative Example 2 | 0.9 | 1.0 | 1.2 |
| *The values of S1 to S3 are ratios relative to S2 that are determined for each Example and Comparative Example. | | | |

Examples 1 to 4 and Comparative Example 2 are examples in which the thickness of the web was increased relative to Comparative Example 1 as a reference. Therefore, the weight of the wheels according to Examples 1 to 4 and Comparative Example 2 was greater than the weight of the wheel according to Comparative Example 1. Although the wheels according to Examples 1 to 4 and Comparative Example 2 had the same weight, the distribution of the increased thickness of the web (volume distribution) was different in each of Examples 1 to 4 and Comparative Example 2.

Table 1 shows the relation among the dimension S1 at the position P1, the dimension S2 at the position P2, and the dimension S3 at the position P3 for each Example and each Comparative Example. The definitions with respect to the positions P1, P2, and P3 and the dimensions S1, S2, and S3 are as described in the above embodiment. In Table 1, for each of Examples 1 to 4 and Comparative Examples 1 and 2, S2 is taken as 1.0, and the ratio of S1 to S2: S1/S2 is shown as the value of S1, and the ratio of S3 to S2: S3/S2 is shown as the value of S3.

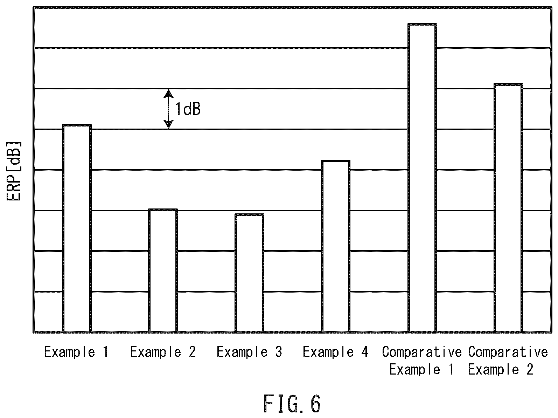

FIG. 6 is a graph showing the ERP of each Example and each Comparative Example. The ordinate of the graph represents the sum of the energy amounts of all frequencies (overall ERP level).

As illustrated in FIG. 6, in Examples 1 to 4 and Comparative Example 2 in which the thickness of the web was increased, the ERP was smaller and the quietness was improved in comparison to Comparative Example 1 in which the thickness of the web was not increased. However, in Comparative Example 2 in which the thickness of the web was greater on the boss side compared to the rim side, the degree of improvement in quietness was small in comparison to Examples 1 to 4. Among Examples 1 to 4 in which the thickness of the web was maximum at the curved portion on the rim side, a particularly high effect of improving quietness was achieved in Examples 2 to 4. Examples 2 to 4 were wheels in which, in comparison to the dimension S3 at the position P3, the dimension S2 at the position P2 located further outward in the radial direction was larger.

It has been confirmed by the analysis that, even when the thickness of the entire web is not increased uniformly, quietness of the wheel can be ensured by increasing the thickness of the curved portion on the rim side. In other words, in a wheel in which the thickness of the web changes along the direction in which the web extends, by making the thickness of the web the maximum thickness at the curved portion on the rim side, the rigidity of the web can be efficiently improved and noise can be suppressed.

The results of the analysis show that it is preferable for the dimensions S1, S2, and S3 at the positions P1, P2, and P3, respectively, to satisfy $S1 \geq S2 \geq S3$ and $S1 > S3$. The relation between S2 and S3 is preferably $S2 > S3$, and more preferably $S3 \leq 0.9 \times S2$. Further preferably, the relation between S2 and S3 is $S3 \leq 0.8 \times S2$.

REFERENCE SIGNS LIST

> 100: Wheel
> 10: Boss
> 20: Rim
> 211: Tread
> 212: Flange
> 30: Web
> 31: Curved Portion
> 31a: First Region
> 31b: Second Region
> 313: Apex
> 314: Base

## Claims

1. A wheel for a railway vehicle, comprising:

   a cylindrical boss,
   a rim arranged on an outer circumferential side of the boss, and
   a web that connects the boss and the rim,
   wherein:

   the rim includes a tread that comes into contact with a top surface of a rail on which the railway vehicle runs, and a flange that is provided continuous with one end of the tread in an axial direction of the wheel and that protrudes outward in a radial direction of the wheel from the tread;
   the web includes a curved portion that is provided continuous with the rim and curves convexly toward an opposite side to the flange in the axial direction in longitudinal sectional view of the wheel, and in which an apex is located further outward than a center of the web in the radial direction; and
   the web has a thickness that changes along a direction in which the web extends in longitudinal sectional view of the wheel, and has a maximum thickness at the curved portion.

2. The wheel according to claim 1, wherein:
   the curved portion includes:

   a first region including the apex, and
   a second region that is arranged on the boss side relative to the first region, and that includes a base of the curved portion; and

the web has the maximum thickness in the first region.

3. The wheel according to claim 2, wherein:
   a thickness of the second region is less than a thickness of the first region.

4. The wheel according to any one of claims 1 to 3, wherein:
   when a thickness of the wheel at a position where an imaginary cylinder, which has a diameter that is 0.72 times an outer diameter of the tread and is coaxial with the wheel, intersects with the wheel is defined as S1; a thickness of the web at a position where an imaginary cylinder, which has a diameter that is 0.66 times the outer diameter of the tread and is coaxial with the wheel, intersects with the web is defined as S2; and a thickness of the web at a position where an imaginary cylinder, which has a diameter that is 0.60 times the outer diameter of the tread and is coaxial with the wheel, intersects with the web is defined as S3; S1, S2, and S3 satisfy $S1 \geq S2 \geq S3$ and $S1 > S3$.

5. The wheel according to claim 4, wherein:
   S2 and S3 satisfy $S3 \leq 0.9 \times S2$.

100

FIG. 1

FIG. 2

Examples

FIG. 3

Comparative Example 1

FIG. 4

Comparative Example 2

FIG. 5

FIG. 6

## INTERNATIONAL SEARCH REPORT

| International application No. |
|---|
| **PCT/JP2023/026180** |

| | |
|---|---|
| **A.** | **CLASSIFICATION OF SUBJECT MATTER** |

***B60B 17/00*** (2006.01)i; ***B61F 13/00*** (2006.01)i
FI: B60B17/00 B; B60B17/00 F; B60B17/00 N; B61F13/00

According to International Patent Classification (IPC) or to both national classification and IPC

| | |
|---|---|
| **B.** | **FIELDS SEARCHED** |

Minimum documentation searched (classification system followed by classification symbols)

B60B17/00; B61F13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2015-500177 A (JOINT STOCK CO. "VYKSA STEEL WORKS") 05 January 2015 (2015-01-05)<br>paragraphs [0001]-[0003], [0008], [0013]-[0020], fig. 1 | 1-5 |
| A | JP 2002-137601 A (SUMITOMO METAL IND., LTD.) 14 May 2002 (2002-05-14)<br>entire text, all drawings | 1-5 |
| A | JP 2021-109525 A (NIPPON STEEL CORP.) 02 August 2021 (2021-08-02)<br>entire text, all drawings | 1-5 |
| A | JP 2004-131002 A (SUMITOMO METAL IND., LTD.) 30 April 2004 (2004-04-30)<br>entire text, all drawings | 1-5 |
| A | JP 2009-545484 A (LUCCHINI RS S.P.A.) 24 December 2009 (2009-12-24)<br>entire text, all drawings | 1-5 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/026180**

| Patent document cited in search report | | | Publication date (day/month/year) | Patent family member(s) | Publication date (day/month/year) |
|---|---|---|---|---|---|
| JP | 2015-500177 | A | 05 January 2015 | US 2014/0300122 A1<br>paragraphs [0001]-[0003],<br>[0007]-[0010], [0018]-[0025],<br>fig. 1<br>EP 2792502 A1<br>paragraphs [0001]-[0003],<br>[0007], [0013]-[0020], fig. 1<br>CA 2866669 A1<br>page 5, lines 1-12, page 7,<br>lines 1-12, page 10, line 16 to<br>page 13, line 5, fig. 1<br>WO 2013/089596 A1<br>CN 104136235 A | |
| JP | 2002-137601 | A | 14 May 2002 | (Family: none) | |
| JP | 2021-109525 | A | 02 August 2021 | (Family: none) | |
| JP | 2004-131002 | A | 30 April 2004 | (Family: none) | |
| JP | 2009-545484 | A | 24 December 2009 | WO 2008/015712 A1<br>entire text, all drawings<br>CN 101500822 A | |

Form PCT/ISA/210 (patent family annex) (January 2015)

## REFERENCES CITED IN THE DESCRIPTION

**Patent documents cited in the description**

- JP 2063901 A
- JP 10081104 A